# EUROPEAN PATENT APPLICATION

(11) **EP 4 289 796 A1**
(43) Date of publication of application: **13.12.2023**
(21) Application number: 21924499.3
(22) Date of filing: 02.02.2021
(51) Int. Cl.: C02F 3/30

(54) **INDUSTRIAL AND MUNICIPAL WASTEWATER TREATMENT PLANT**

(71) Applicant: Biologia y Filtración, S.L., 08187 Santa Eulalia de Ronçana (Barcelona) (ES)
(72) Inventor: GARCIA COLOMA, Josep Mª, 08187 SANTA EULALIA DE RONÇANA-BARCELONA (ES); CRESPI ROSSEL, Martin, 08187 SANTA EULALIA DE RONÇANA-BARCELONA (ES)
(74) Representative: Urizar Anasagasti, Jesus Maria
(86) International application number: PCT/ES2021/070079
(87) International publication number: WO 2022/167702

(57) **Abstract**

The present invention relates to an industrial and urban wastewater treatment facility consisting of two steps, namely a first anoxic step and a second biological and aerobic step, which are carried out in two suitably interconnected tanks (1, 2) forming two reactors, wherein: the first two tanks (1, 2) contain plastic biomass carriers (5, 6), in which the largest possible amount of biomass adheres to the walls; while the second and final tank (2), formed as an aerobic reactor, contains ultra/nano-filtration membrane modules (7) and diffusers (14) which provide the necessary air for the MBBR/MBR membrane bioreactor, in which the aim is to achieve the highest possible concentration of biomass on the carriers and in suspension in order to remove the remaining organic matter, transforming the nitrogenous materials into nitrates to remove all pathogenic bacteria, more than 50% of the viruses and many of the emerging contaminants that get stuck in the sludge separated from the system.

## Description

### Technical field

The present invention falls under wastewater purification and treatment.

This facility operates through anoxic and aerobic biological processes with part of the biomass suspended and part of the biomass adhered to plastic carriers, combining the system with ultrafiltration membranes, adding two existing technologies that are separately called MBBR (fluidized bed) and MBR (membrane bioreactor) and that are already recognized as highly efficient, although across them as a whole, a multiplier performance has been observed that each of them offers separately.

This system is applicable in facilities dedicated to the treatment of wastewater heavily loaded with materials that are difficult to degrade (meat industry, pharmaceutical industry, chemical industry, textile industry, municipal water with a strong component of water from agriculture and livestock), or existing facilities that have become obsolete, which do not have the capacity to absorb load increases that have occurred over time since their initial design; it is also aimed at designing new plants where the available space is reduced, plants with a high load of some contaminants such as nitrogen in its various chemical forms and also in the treatment of wastewater with emerging contaminants (disruptive switches), in addition to offering a significant reduction in energy consumption due to the influence that occurs on the "ALPHA" factor, which affects the same percentage in the reduction of CO2 that is sent to the atmosphere and reduction of surface and volume used.

### State of the art

At present, facilities called MBBR (moving bed) are known, which consist of an anoxic system and oxic biological reactors that contain biomass carriers where all biodegradable matter and up to 85% of nitrogenous compounds are removed. A facility of this type is completed with a dissolved air flotation system where the liquid phase (purified water) and solid phase (discarded activated sludge) are separated; a classic clarifier is also often used.

On the other hand, wastewater treatment facilities are also known, and the usually include an initial anoxic system and an aerobic reactor with ultrafiltration membranes, removing biodegradable matter and converting all forms of nitrogen (N) into nitrates.

The references MBBR and MBR are the abbreviations of the English names of the corresponding systems.

It has been found that the MBBR system does not clog if the ratio between the volume of carriers and the total useful volume of the biological reactor does not exceed 65%, because when the thickness of the biofilm reaches the point where oxygen does not reach the internal layers of the biomass, it detaches itself due to the creation of methane gas therein, which causes a micro-explosion expelling the biomass from the wall of the carrier. In MBR systems, the sludge that, due to filtration, can clog the pores of the membrane because of the movement thereof, is detached. It is evident that the previously described systems are effective as long as the clogging of the carriers of the MBBR system or the irreversible fouling of the filtration membranes of the MBR system do not occur.

Emerging contaminants are those that are discharged into domestic or industrial water and which, up until now, are not regulated by current legislation, such as traces of drugs, contained in human excrement and animal farms, pesticides, drugs, fuel supplements, surfactants (personal hygiene products, products for washing clothes and dishes), and other contaminants that are being found in wastewater, rivers and other surface currents. These contaminants in most purification facilities in which conventional treatment systems are applied, up until now, are not removed from the wastewater and therefore become part of the natural environment that it reaches, causing serious imbalances in nature, especially in fish that assimilate these contaminants and that, when they reach consumers' tables, are ingested by consumers.

ES-2190895 describes a hybrid membrane biological reactor for industrial and urban wastewater treatment, which is made up of three chambers: an anoxic chamber (1), an aerobic chamber (2) and a membrane filtration chamber (3) in which the microbial sludge is kept in suspension. While confined in the aerobic chamber (2) is a granular and rough plastic support on which a biofilm grows with a high fraction of nitrifying microorganisms and is kept fluidized by applying an air stream that is distributed through diffusers in the camera; an influent wastewater is discharged onto the anoxic chamber (1) through a pipe located in the upper part of the chamber and in said anoxic chamber the influent wastewater is brought into contact with the mixed liquor and a stream of recirculated sludge from the membrane filtration chamber (3), which incorporates ultrafiltration hollow fiber membrane modules that are used to separate the treated water from the biological sludge, recirculating the sludge to the anoxic chamber in order to maintain an adequate microbial concentration.

ES-2401445 describes an integrated methanogenic anaerobic reactor and membrane bioreactor system for the removal of organic matter and nitrogen from wastewater, which is also made up of three chambers: a methanogenic anaerobic chamber (1); an anoxic chamber (2) comprising a suspended plastic particle filler (14a); and an aerobic filtration chamber (3) comprising a suspended plastic particle filler (14b) and filtration membranes (20).

### Description of the invention

Based on the prior art, one objective of the present invention is to provide a wastewater treatment system, with the synergistic result of the two technologies described above, in such a way that it multiplies the benefits that both offer separately.

In order to achieve the proposed objectives, mentioned in the previous section, the invention proposes a facility which has the features of claim 1.

The aforementioned facility consists of two steps, namely a first anoxic step and a second fully biological and aerobic step, which are carried out in two suitably interconnected tanks forming two reactors containing plastic biomass carriers, which aim to achieve the largest possible amount of adhered biomass; ultrafiltration/nano-filtration membranes are installed in this second tank, where it becomes important to achieve the highest concentration of biomass in suspension. The biomass in suspension will be that which the ultrafiltration system allows the fractionation of the mixed liquor into clarified water after filtration and concentrated biomass; maintaining the largest possible amount of biomass without causing clogging problems is the success of the process.

The size of the tanks is at least 1/3 of the total volume for the anoxic reactor and 2/3 for the aerobic reactor, so the aerobic reactor will be at least double the aerobic reactor; these proportions are normal for domestic water, but in industrial water, which is also the objective of this invention, the aerobic reactor can be 3, 4 and up to 5 times the size of the anoxic reactor, depending on the organic, nitrogenous load or water with a COD/BOD5 ratio greater than 3/1.

So that the membranes do not suffer damage due to the impact of the biocarriers (25 mm ∅), they are located in a kind of mesh bag made of polypropylene with a 5-10 mm clearance. This mesh not only serves as protection for the fibers of the membranes, but also acts as another support element for the biomass.

The carriers used are the so-called BIOFILL C-2 with a specific surface of 590 m2/m3. Installed at the bottom of the aerobic reactor is a perforated membrane that allows the passage of air bubbles and prevents carriers from depositing at the bottom of the tank below the level of the air diffusers when the air stops for any reason.

The movement of the carriers is carried out using coarse air bubbles if the height of the water surface does not exceed 4.5 m; if so, side wall agitators are installed.

### Description of the drawings

As a complement to the description provided herein, and for the purpose of helping to make the features of the invention more readily understandable, the present specification is accompanied by a set of drawings which, by way of illustration and not limitation, represent the following:

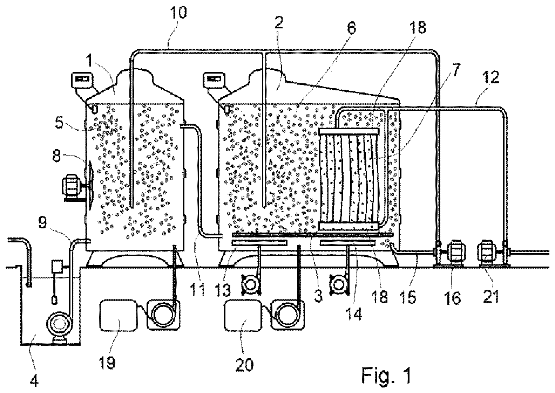

Figure 1 shows a schematic elevational view of a facility according to the invention.

### Embodiment of the invention

The treatment process begins by receiving the raw water in the roughing system, subsequently passing to a pH correction system (4) in the case of industrial water; this system is not usually installed in the case of municipal water. The pH value must be kept between 6.5 and 8, a range that must be respected for any biological process to be viable. The tank (4) must be included within the object of the invention. Throughout the facility of the invention, there are two tanks that make up two reactors: a first tank (1), which constitutes an anoxic reactor, and a second (2), which constitutes the MBBRMBR aerobic biological reactor, mounted in series as indicated, with conduits and installations described in greater detail below.

Right at the entrance to the reactor (1) a by-pass will be installed which, by means of pneumatic valves, will close the inlet for the water coming from the primary treatment and will divert it through an external pipe outside the treatment object of the invention in the event that the pH value could not comply with that established. The redox indicator relates this redox value to the degree of denitrification of the wastewater. This equipment provides with a series of values that will relate these to the necessary recirculation flow from the second reactor.

The first tank (1) receives the water from a primary roughing treatment + pH correction; in tank (4) pumping equipment sends the water through a conduit (9) located in the lower part of said tank (1) and also the conduit 10 that provides recirculating water from the tank (2) and exits through a conduit (11) located in the upper part of the opposite wall. This first tank (1) is equipped with a disorderly plastic filler (BIOFILL C-2) (5) that configures biomass carriers.

In tank (1) there is also at least one agitator (8), with a speed of around 4060 r.p.m. which produces the movement of the wastewater and the carriers (5) submerged in the anoxic reactor to achieve the effect of a fluidized bed, forming as a whole what is known as an MBBR facility. The disorderly fillers (5) allow housing a large amount of denitrifying biomass, which is responsible for converting organic and nitrogenous matter into carbon dioxide and nitrogen (gas). The volume of the filler inside the reactor can be between 35 to 65% of the useful volume of the reactor, always depending on the concentration of nitrates (NO3) to be removed. With this design, when the organic load is high, bacteria take oxygen from the inlet water, thus eliminating a considerable percentage (15-25% of the BOD and a first reduction of H4N), whereby achieving a reduction in the size of the reactor (2) and considerable energy savings.

In this first tank or reactor (1), not only is the aforementioned primary treatment water (9) received, but so is the recirculation water (10) from the nitrification reactor and optionally the sludge purged in the MBR system.

As previously indicated, the first tank (1) and the second tank (2) are attached through a conduit (11), so that the water overflows into this second reactor (2). This attachment between tanks (1, 2) can be physical, or simply by means of a pipe (11) that allows the transfer by overflow, as in the example of Figure 1. Depending on whether the tanks are civil works attached by a dividing wall or by vertical cylindrical tanks made of plastic materials, steel, etc.

A redox controller unit (0) has been installed in this tank (1); this element is the one that will control the recirculation pumps of the nitrate-saturated mixed liquor from reactor (2) to reactor (1).

The second tank (2) is configured as an aerobic reactor, that is, it has an air supply to oxidize the organic matter of the wastewater that comes from the anoxic reactor (1) overflow. The movement of the carriers, in this case, can be carried out by means of the air bubbles themselves, if these are coarse bubbles, or by means of mechanical agitation at low revolutions if the bubbles are fine. This working system is also known as fluidized bed (MBBR).

As in the anoxic reactor (1), in this second reactor (2) a biomass carrier filler (6) (BIOFILL C-2) is installed, with a volume of between 35 - 65% with respect to the useful volume of the reactor. The useful volume of this reactor will be at least double the reactor (1), but it can be 3, 4 or 5 times higher, depending on the characteristics of the wastewater if it is difficult to degrade or for having a strong concentration of nitrogenous materials that must be converted into nitrates (NO3). The movement of the carriers (6) is carried out by means of coarse air bubbles produced by air diffusers (13), although occasionally, this movement could be produced by one or several slow mechanical agitators, or with both elements combined (that of at least one agitator and the one produced by the coarse or fine bubbles coming from said diffusers). The air supplied by diffusers (13), whether coarse or fine bubble, is supplied by a set of blowers located outside said tank (2).

The mixed liquor recirculated in the form of a loop, the sludge settled at the bottom of the reactor through the aforementioned conduit or pipe (10) also reaches this reactor (2). Since organic matter is needed in the nitrification reactor to convert the nitrogenous compounds NH4 and NO2 into nitrates NO3, if the amount of organic matter is not sufficient, the most appropriate ratio is comprised between 60-80%, depending on whatever is needed for nitrification, a system of foreign carbonated matter outside the system, which is dosed through dosing or peristaltic pumps (20), has been provided. The main function of this reactor is to achieve as much biomass as possible on the walls of the carriers, for this reason it is extremely important to ensure that the agitation of the carriers is sufficient to move them evenly, but without exceeding it, so as not to cause collisions between them that could cause the detachment of the biomass. The concentration of biomass in suspension should be between 2 and 3 mg/l in the initial part of the reactor and up to 20 g/l at the end of the reactor, while the thickness of the biofilm on the walls of the carriers should be between 1 - 1.5 mm. The increase in biomass in suspension throughout the reactor (2) is due to the increase in diffusers in the end part.

The colonies of microorganisms that are generated in each of the reactors come from their own waste in meat industries, cutting rooms, fish farms, animal farms, even hospitals, etc., and from human excrement in municipal water. When the wastewater contains products that are difficult to degrade, it is possible to help maintain the concentration of bacterial colonies with the addition of specialized bacteria, also by means of the pumps (19 and 20), designed to complement the nitrification-denitrification processes or to eliminate fats and oils, from the respective tanks.

Ultra/nano-filtration membranes (7) are installed in this tank (2), which are preferably of the so-called hollow fiber type. They are capillary type elements that are hollow inside, in which the filtration is produced by a drop in pressure effect therein caused by a vacuum pump that forces the water to pass through the membrane walls perpendicularly. The pore of the membrane is 0.02 µm or less so that suspended sludge is retained on the membrane walls. This sludge in a very high percentage equal to or greater than 95% has a size much larger than the pore diameter and is repelled by the movement of the membranes produced by the coarse air bubbles. The rest of the percentage of the sludge can remain adhered to the surface of the membrane, this phenomenon being solved by washing in countercurrent with the already purified water itself.

Each individual membrane (7) is attached to a collector (18) at both ends, forming a set referred to as a frame. The set of frames are attached at both ends to a general manifold and the latter is attached to the installed vacuum system.

This process can be carried out with other types of membranes: flat membrane, pressure membrane, ceramic membrane or any other type of membrane that fits the purpose sought in this process.

The membranes are installed in 10 mm mesh bags. The collectors that collect the filtered water are secured to stainless steel frames that are in turn secured to the walls of the reactor. In this way, the membranes can move frontally as if they were a curtain shaken by the wind, in a section of about 2 cm; this movement is produced by the coarse bubbles released by the diffusers from the base of the tank.

Almost at the bottom of the tank, above the diffusers but below the membranes, a net made of the same material that protects the membranes (3) is installed, so that when aeration stops for any reason the carriers do not fall to the bottom of the tank below the diffusers. The bags that protect the membranes and the net are made of polypropylene yarn.

The dissolved 02 concentration varies throughout the reactor (2), so at the start it will be between 2.5 - 3 ppm while at the end it will be (4.5 - 6 ppm), which is necessary both to oxidize the total organic matter and to convert the nitrogenous compounds (H4N and NO2) in the medium. The increase in aeration at the end of the reactor (2) also serves to cause the necessary movement of the membranes in order to expel the sludge from their surface. The expressed dissolved 02 concentration will be maintained as a result of an element for controlling this parameter with two probes that will be submerged at the two ends of the tank. The supplied air will serve both to promote the movement of the water and sludge mixture and of the membranes.

A vacuum generator (21) causes a suction effect in the collectors (8, 18) to which the membranes (7) are attached, in order to cause the passage of water through same. This generator can be a vacuum pump, or a peristaltic pump.

Preferably, the ultra-filtered water will be stored in an attached tank, to be reused as a means of backwashing the membranes using a pressure pump.

In our system, the secondary clarifier is eliminated in such a way that only the sludge that we wish to purge is extracted when it reaches the critical point, which would be the clogging of the membranes. In this tank, concentrations of suspended matter of up to 20 g/l can be obtained when working with this large amount of sludge, allowing high concentrations of nitrogenous components, organic matter and emerging contaminants, etc., to be attacked, making it possible to obtain an extraordinarily clarified water quality with a turbidity of less than 5 NTU, regardless of the origin of the water from any industrial process, including textile processes, the meat industry, or leachates. In addition, ultra-filtered water is free of pathogenic bacteria, which in municipal water is an extraordinary guarantee of quality, also removing more than 50% of viruses, values that are complemented by a simple ultraviolet lamp or chlorination; water is obtained for any reuse, garden irrigation, soil cleaning, infiltration into underground or public channels upstream of the municipal water treatment plant.

In the biological reactor (2) there is a dissolved oxygen controller that, in addition to marking the punctual reading of this parameter, regulates the power of the blowers that drive air to the diffusers (13), so that it is not being exceeded in its supply to the system, but neither is it below the necessary value (4.5 ppm) for the suitable function of organic matter oxidation and nitrification to be carried out.

The wastewater entering tank (1) is mixed with recirculating water from tank (2). This recirculation is produced by a submerged pump that drives the water from the tank (2) through a pipe (10).

Having described the nature of the invention, as well as a preferred embodiment, it is obvious that the invention is susceptible of industrial application in the indicated sectors. Likewise, it is hereby stated for all appropriate purposes that the materials, shape, size, and arrangement of the described elements can be modified, provided that this does not entail an alteration of the essential features of the invention claimed below:

## Claims

1. An industrial and urban wastewater treatment facility, **comprising:**
- a first tank (1) for anoxic treatment that contains a filler material (5), with a disorderly arrangement, in which the colonies of denitrifying bacteria are housed in order to remove the nitrogenous compounds contained in the raw water (9) that reaches the reactor together with a part of the recirculation water (10) that comes from a second tank (2), said tank (1) having:
∘ a conduit (11) coupled to the upper part of said tank (1) through which the water mixture exits said tank (1) by overflowing, without air being supplied therein,
∘ a means (8) for mechanical agitation, the volume and speed of which depend on the dimensions of the reactor and the geometry of the filler material (5) contained in said tank (1); and
∘ a set of equipment (19) for the supply of additional carbonaceous matter, not contained in the wastewater, as well as the external addition of specialized denitrifying microorganisms that help the function;
- a second tank (2) for aerobic treatment which has a water inlet for water from the first tank (1) and recirculated water (10), which contains a filler (6) with a disorderly configuration on the walls of which there are deposited colonies of oxidizing and nitrifying bacteria, in which oxidation occurs as a result of the air provided by air diffusers (13) with the air driven by blowers; containing:
∘ ultra/nano-filtration hollow fiber membrane modules (7) submerged in the mixed liquor (mixture of wastewater and activated sludge) that comes from the first reactor (1);
∘ blowers that provide air that is distributed by a set of diffusers (14) in order to produce the oxidation of organic matter and the conversion of nitrogenous compounds into nitrates, while shaking the membranes so that the sludge does not remain adhered to them;
∘ centrifugal pumps (16) for recirculating part of the mixed liquor to the inlet of its own tank (2) and to the anoxic tank (1);
∘ a filtered water outlet (12) connected to a vacuum pump (21), which produces a suction effect on the water that forces it to perpendicularly cross the wall of the membranes that are individually connected to main collectors (18) that extract the filtered water from the system through the conduit (12) to the outside of the facility.

2. The facility according to claim 1, **characterized in that** the filler material (5, 6) that is installed in the tanks (1, 2) consists of biomass and plastic carriers, disordered and with a density less than 1 if it is fresh water and greater than 1 if it is salt water, with the concentration of the carriers in the tanks being between 35 and 65% with respect to the useful volume of the corresponding tank, depending on the load in the water to be treated, where the denitrifying and oxidizing bacteria are fixed, the content of said tanks acting as separate fluidized bed reactors.

3. The facility according to any of the previous claims, **characterized in that** the movement of the masses of water and filler material (5) in the first tank (1) is achieved as a result of a mechanical agitation (8) at low revolutions.

4. The facility according to any of the previous claims, **characterized in that** the movement of the masses of water and filler material (6) in the second tank (2) is achieved as a result of coarse air bubbles provided by the diffusers (14) with or without the help of mechanical agitation.

5. The facility according to any of the preceding claims, **characterized in that** the collectors (18) that form the frames of ultra/nano-filtration hollow fiber membranes installed in the tank (2) are bagged in polypropylene mesh with a mesh size that allows separating the clear water from the activated sludge.

6. The facility according to any of the previous claims, **characterized in that** the tank (1) has installed therein a Redox controller measuring equipment the point value of which indicates the degree of denitrification that is taking place, thus regulating the percentage of recirculation of mixed liquor from the tank (2).

7. The facility according to any of the previous claims, **characterized in that** the injection of air into the tank (2) will be carried out from the lower part thereof.

8. The facility according to any of the previous claims, **characterized in that** the ultra/nano-filtered water is obtained by a drop in pressure using a vacuum or peristaltic pump (21) outside the tank (2).
